# EUROPEAN PATENT APPLICATION

(11) **EP 4 429 253 A1**
(43) Date of publication of application: **11.09.2024**
(21) Application number: 22889807.8
(22) Date of filing: 21.10.2022
(51) Int. Cl.: H04N 21/234, G06F 3/01, G06T 13/40, G06T 19/00

(54) **DISTRIBUTION DEVICE, DISTRIBUTION METHOD, AND PROGRAM**

(30) Priority: 04.11.2021 JP 2021179943
(71) Applicant: Sony Group Corporation, Tokyo 108-0075 (JP)
(72) Inventor: INOUE Masayuki, Tokyo 108-0075 (JP); YAMAGUCHI Hiroshi, Tokyo 108-0075 (JP); KAJI Hidetaka, Tokyo 108-0075 (JP); FUKAZAWA Ryo, Tokyo 108-0075 (JP); TAKEI Shintaro, Tokyo 108-0075 (JP)
(74) Representative: D Young & Co LLP
(86) International application number: PCT/JP2022/039360
(87) International publication number: WO 2023/079987

(57) **Abstract**

The present technology relates to a distribution device, a distribution method, and a program that enables to reduce a communication amount while maintaining a natural motion of an avatar.

The distribution device according to the present technology includes a reception unit that receives first motion information indicating a motion of a user, a distribution unit that distributes second motion information indicating a motion of an avatar corresponding to the user, to a terminal that displays the avatar, and an adjustment unit that adjusts an information amount of the second motion information distributed by the distribution unit in accordance with the first motion information. The present technology is applicable, for example, to an information processing system that provides an application for reflecting a motion of the user who uses the terminal connected via a network on the avatar in a virtual space.

## Description

### TECHNICAL FIELD

The present technology relates to a distribution device, a distribution method, and a program, and more particularly, to a distribution device, a distribution method, and a program that can reduce a communication amount while maintaining a natural motion of an avatar.

### BACKGROUND ART

There is an application that reflects motions of a plurality of users on respective avatars arranged in a virtual space using a plurality of terminals connected via a server on a network.

In order to naturally move the avatar, the plurality of terminals needs to transmit motion information indicating the motion of the avatar to each other. As the number of users increases, an information amount of the motion information transmitted and received by the server explosively increases.

Patent Document 1 describes a technique for varying an information amount per unit time of distribution performed by a distribution unit in accordance with a distance between avatars in a virtual space and reducing a load on a system.

Furthermore, for example, in a case where the motion of the avatar is indicated by a joint position of the avatar or the like, by reducing the number of joints of which motion information is distributed, an information amount of the motion information can be reduced. In this case, by using a technique called forward kinematics (FK) or inverse kinematics (IK), on the basis of the distributed motion information of the joint, motion information of other joints is estimated.

### CITATION LIST

### PATENT DOCUMENT

Patent Document 1: Japanese Patent Application Laid-Open No. 2020-91504

### SUMMARY OF THE INVENTION

### PROBLEMS TO BE SOLVED BY THE INVENTION

With the technique described in Patent Document 1, since an information amount of motion information of an avatar positioned away in the virtual space is reduced, there is a case where a behavior of the avatar becomes unnatural. Since an entire body of the avatar is displayed as the avatar is position farther, there is a possibility that a user who uses a terminal sees the avatar that unnaturally behaves.

Furthermore, in a situation where another avatar is arranged behind the avatar, like a concert venue, there is a case where the method for varying the information amount of the motion information is not effective, in accordance with a distance.

With the technique called FK or IK, there is a case where the estimation of the motion information of the joint that is not distributed fails and the avatar behaves unnaturally. Furthermore, when a distribution frequency of the motion information is further reduced in order to reduce the information amount to be distributed to each terminal, with these techniques, the estimation of the motion information of the joint that is not distributed may be likely to fail.

Therefore, it has been not easy to reduce the information amount of the motion information transmitted and received via the server while naturally moving the avatar.

The present technology has been made in view of such a situation, the present technology makes it possible to reduce a communication amount while maintaining a natural motion of an avatar.

### SOLUTIONS TO PROBLEMS

A distribution device according to one aspect of the present technology includes a reception unit that receives first motion information indicating a motion of a user, a distribution unit that distributes second motion information indicating a motion of an avatar corresponding to the user, to a terminal that displays the avatar, and an adjustment unit that adjusts an information amount of the second motion information distributed by the distribution unit in accordance with the first motion information.

A distribution method according to one aspect of the present technology by a distribution device includes receiving first motion information indicating a motion of a user, adjusting an information amount of second motion information indicating a motion of an avatar, distributed to a terminal that displays the avatar corresponding to the user, and distributing the second motion information to the terminal.

A program according to one aspect of the present technology causes a computer to execute processing including receiving first motion information indicating a motion of a user, adjusting an information amount of second motion information indicating a motion of an avatar, distributed to a terminal that displays the avatar corresponding to the user, and distributing the second motion information to the terminal.

In one aspect of the present technology, the first motion information indicating the motion of the user is received, the information amount of the second motion information indicating the motion of the avatar to be distributed to the terminal that displays the avatar corresponding to the user is adjusted, and the second motion information is distributed to the terminal.

### BRIEF DESCRIPTION OF DRAWINGS

Fig. 1 is a diagram illustrating a configuration example of an information processing system according to an embodiment of the present technology.
Fig. 2 is a block diagram illustrating a configuration example of a head mounted display terminal.
Fig. 3 is a block diagram illustrating a configuration example of a server.
Fig. 4 is a diagram illustrating an example of a motion amount of a joint of an avatar.
Fig. 5 is a flowchart for explaining application execution processing of the head mounted display terminal.
Fig. 6 is a flowchart for explaining distribution processing of the server.
Fig. 7 is a block diagram illustrating a configuration example of a head mounted display terminal according to a first modification.
Fig. 8 is a block diagram illustrating a configuration example of a server according to the first modification.
Fig. 9 is a diagram illustrating a state of motions of a user and the avatar.
Fig. 10 is a block diagram illustrating a configuration example of a server according to a second modification.
Fig. 11 is a diagram illustrating an example of importance of each part of a body.
Fig. 12 is a block diagram illustrating a configuration example of a server according to a third modification.
Fig. 13 is a block diagram illustrating a configuration example of a head mounted display terminal according to the third modification.
Fig. 14 is a diagram illustrating an example of a method for obtaining support information indicating whether or not a shielding object exists between a viewpoint of a viewer and each joint of the avatar.
Fig. 15 is a diagram illustrating an example of a method for obtaining support information indicating an amount of light reaching the avatar.
Fig. 16 is a diagram illustrating an example of a method for obtaining support information indicating a display area of the avatar.
Fig. 17 is a block diagram illustrating a configuration example of a head mounted display terminal according to a fourth modification.
Fig. 18 is a block diagram illustrating a configuration example of a server according to the fourth modification.
Fig. 19 is a diagram illustrating an example of a method for estimating an attention degree.
Fig. 20 is a diagram illustrating another example of the method for estimating the attention degree.
Fig. 21 is a diagram illustrating still another example of the method for estimating the attention degree.
Fig. 22 is a block diagram illustrating a configuration example of hardware of a computer.

### MODE FOR CARRYING OUT THE INVENTION

Hereinafter, a mode for carrying out the present technology will be described. The description will be given in the following order.
1. Configuration of Information Processing System
2. Operation of Each Device
3. Modifications

### <1. Configuration of Information Processing System>

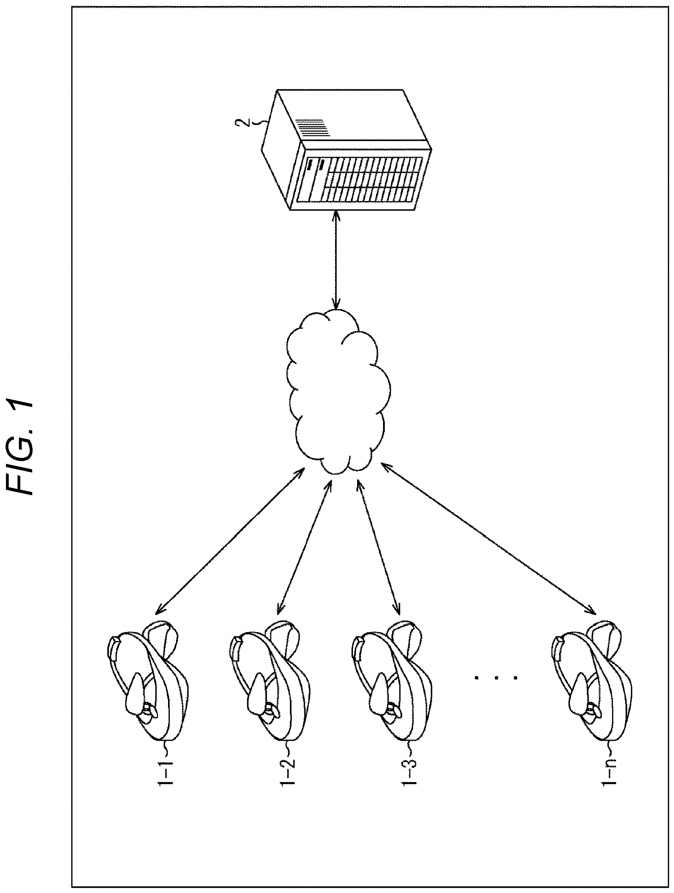

Fig. 1 is a diagram illustrating a configuration example of an information processing system according to an embodiment of the present technology.

The information processing system in Fig. 1 is a system that realizes an application for reflecting motions of a plurality of users on respective avatars arranged in a virtual space.

As illustrated in Fig. 1, the information processing system includes n head mounted display terminals 1-1 to 1-n connected to a server 2 via a network.

The head mounted display terminals 1-1 to 1-n acquire motion information indicating motions of users who wear the head mounted display terminals 1-1 to 1-n and transmits the motion information to the server 2. Furthermore, the head mounted display terminals 1-1 to 1-n receive motion information indicating a motion of an avatar corresponding to another user distributed from the server 2 and apply the motion information of the avatar to a 3D model of the avatar.

The user, as a viewer, can view a video in the virtual space in which the avatar that expresses the motion of the other user and operates is arranged using the head mounted display terminals 1-1 to 1-n, while moving a viewpoint in the virtual space.

The server 2 receives and holds the motion information of the user transmitted from the head mounted display terminals 1-1 to 1-n. After adjusting an information amount of the motion information of the avatar on the basis of the motion information of each corresponding user, the server 2 functions as a distribution device that distributes the information to the head mounted display terminals 1-1 to 1-n.

Note that, hereinafter, in a case where it is not necessary to individually distinguish the head mounted display terminals 1-1 to 1-n from each other, the head mounted display terminals 1-1 to 1-n are simply referred to as a head mounted display terminal 1.

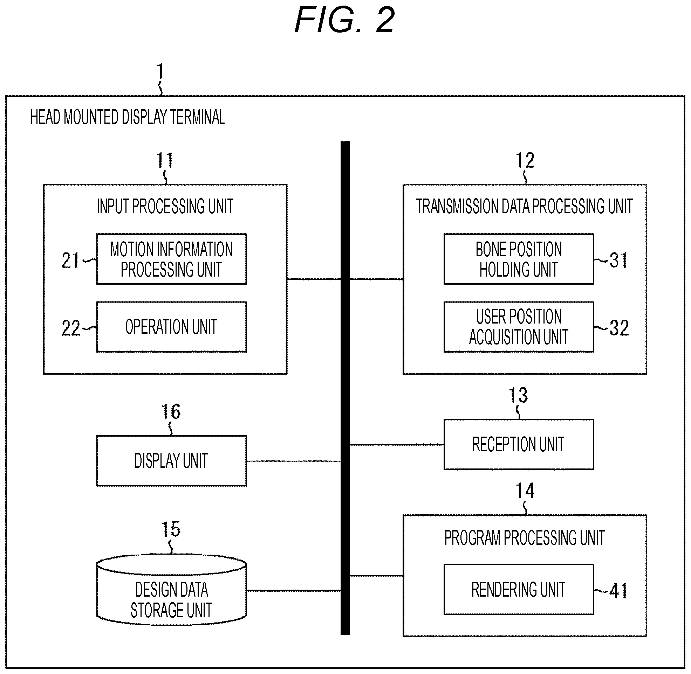

Fig. 2 is a block diagram illustrating a configuration example of the head mounted display terminal 1.

As illustrated in Fig. 2, the head mounted display terminal 1 includes an input processing unit 11, a transmission data processing unit 12, a reception unit 13, a program processing unit 14, a design data storage unit 15, and a display unit 16.

The input processing unit 11 executes processing for inputting data from a controller and a sensor. The input processing unit 11 includes a motion information processing unit 21 and an operation unit 22.

The motion information processing unit 21 acquires bone position information indicating a posture of the user using a joint position and a joint angle as the motion information of the user. For example, the motion information processing unit 21 estimates bone position information on an upper body of the user, on the basis of positions of the controllers held by both hands of the user and the head mounted display terminal 1 worn by a head of the user. The positions of the controller and the head mounted display terminal 1 are detected, for example, by a sensor provided in each device.

Furthermore, for example, the motion information processing unit 21 can acquire the bone position information on the basis of a captured image obtained by imaging an entire body of the user with a camera.

The operation unit 22 receives inputs of operations, for example, using an arrow key and an operation button provided in the controller. A moving direction, a moving amount, or the like of an avatar corresponding to the user in the virtual space are input using the arrow key and the operation button.

The transmission data processing unit 12 includes a bone position holding unit 31 and a user position acquisition unit 32.

The bone position holding unit 31 holds the bone position information as the motion information of the user acquired by the motion information processing unit 21.

The user position acquisition unit 32 acquires position information indicating the position of the avatar corresponding to the user in the virtual space, on the basis of the operation of which the input has been received by the operation unit 22. Furthermore, the user position acquisition unit 32 may acquire the position information, on the basis of a moving amount of the user calculated from the motion information acquired by the motion information processing unit 21. The position in the virtual space also serves as a viewpoint as a viewer.

The transmission data processing unit 12 compresses or encrypts the motion information and the position information of the user, converts the information into a data format to be transmitted via the network or the like, and generates transmission data. The transmission data processing unit 12 transmits the transmission data to the server 2 via the network.

The reception unit 13 receives distribution data distributed from the server 2. The reception unit 13 decodes or decompresses the distribution data and acquires the motion information and the position information of the avatar corresponding to the other user.

The program processing unit 14 includes a rendering unit 41. The rendering unit 41 applies the motion information of the avatar acquired by the reception unit 13 to each 3D model. The rendering unit 41 performs rendering and generates a rendering video indicating the virtual space viewed from the viewpoint of the user.

In this virtual space, each avatar is arranged on the basis of the position information of the avatar corresponding to the other user. Design data of an object or the avatar corresponding to the other user in the virtual space and the 3D model of the avatar are read from the design data storage unit 15, and used when rendering is performed.

The design data storage unit 15 stores the 3D model and the design data of the avatar and the object.

The display unit 16 displays the rendering video generated by the rendering unit 41.

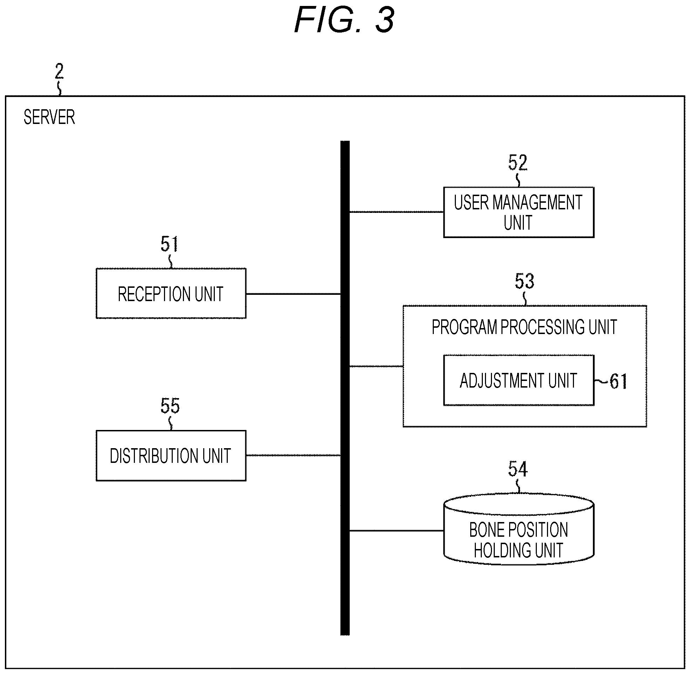

Fig. 3 is a block diagram illustrating a configuration example of the server 2.

As illustrated in Fig. 3, the server 2 includes a reception unit 51, a user management unit 52, a program processing unit 53, a bone position holding unit 54, and a distribution unit 55.

The reception unit 51 receives the transmission data transmitted from the head mounted display terminal 1. The reception unit 51 decodes or decompresses the transmission data and acquires the motion information and the position information of the user.

The user management unit 52 holds login information of the user and manages a scene (world) that each user experiences by viewing the rendering video. For example, in the information processing system, to the head mounted display terminals 1 of the users who experience the same scene, the motion information of the avatar corresponding to each user is distributed to each other.

The program processing unit 53 includes an adjustment unit 61. The adjustment unit 61 sets a distribution priority indicating a priority (value criterion) regarding the distribution of the motion information of the avatar corresponding to the user, on the basis of at least the motion information of the user and adjusts the information amount of the motion information of the avatar to be distributed to the head mounted display terminal 1 by the distribution unit 55, in accordance with the set distribution priority. The motion information of the avatar is bone position information indicating a posture of the avatar using a position and an angle of the joint of the avatar corresponding to a joint of the user.

For example, the adjustment unit 61 adjusts a distribution frequency of the motion information of the avatar for each joint of the avatar, in accordance with the distribution priority set on the basis of a motion amount of the joint of the user indicated by the motion information of the user. The motion amount of the joint includes a change amount of the joint position and a change amount of the joint angle. The motion amount of the joint of the user is calculated, for example, on the basis of a history of the motion information of the user held by the bone position holding unit 54.

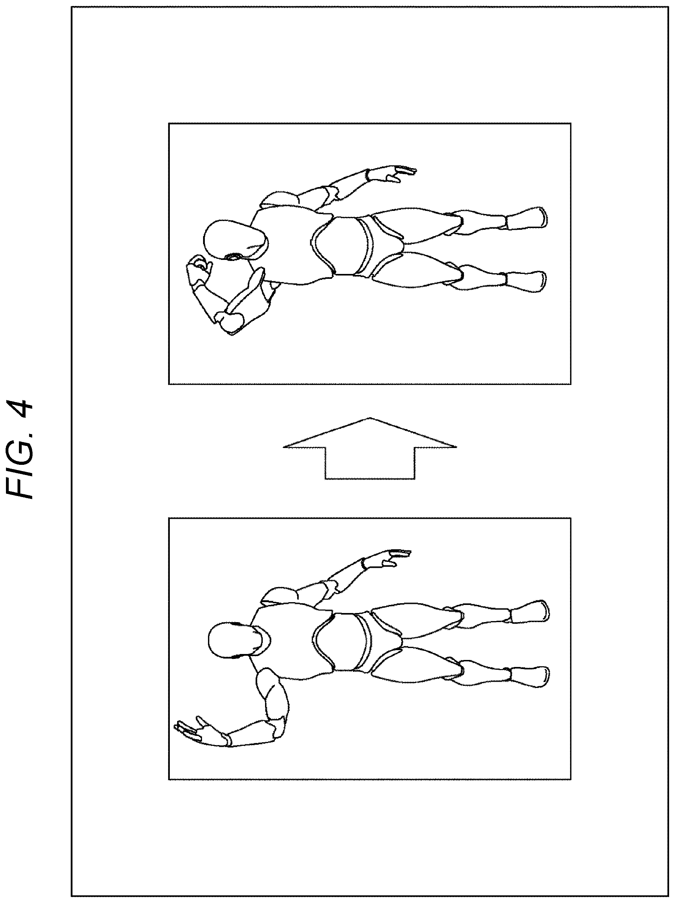

Fig. 4 is a diagram illustrating an example of the motion amount of the joint of the avatar.

It is assumed that motion information of an avatar such that the avatar that raises a right arm as illustrated on a left side in Fig. 4 brings the right arm to be closer to the head, as illustrated on a right side in Fig. 4, be distributed.

In this case, for example, a change amount of a joint position of a neck is small, and a change amount of a joint angle is also small. Therefore, the adjustment unit 61 sets a distribution priority of the neck joint to be low and sets a frame rate at which bone position information of the neck joint is distributed to be a value lower than a reference value.

A change amount of a joint position of a right shoulder is small, and a change amount of a joint angle is large. Therefore, the adjustment unit 61 sets a distribution priority of the right shoulder joint to be high and sets a frame rate at which bone position information of the right shoulder joint is distributed to be a value higher than the reference value.

A change amount of a joint position of a right elbow is moderate, and a change amount of a joint angle is small. Therefore, the adjustment unit 61 sets a distribution priority of the right elbow joint to be moderate and sets a frame rate at which bone position information of the right elbow joint is distributed to be the reference value.

A change amount of a joint position of a right hand is large, and a change amount of a joint angle is also large. Therefore, the adjustment unit 61 set a distribution priority of the right hand joint to be high and sets a frame rate at which bone position information of the right hand joint is distributed to be a value higher than the reference value.

In this way, for example, in a case where at least one of the change amount of the joint position or the change amount of the joint angle is large, the distribution priority of the joint is set to be high, and in a case where at least one of the change amount of the joint position and the change amount of the joint angle is moderate, the distribution priority of the joint is set to be moderate. In a case where both of the change amount of the joint position and the change amount of the joint angle are small, the distribution priority of the joint is set to be small.

Note that, in the above, the change amounts of the joint position and the joint angle are divided into three levels including large, moderate, and small and described. However, the frame rate at which the bone position information is distributed may be set in proportion to the change amounts of the joint position and the joint angle.

Returning to Fig. 3, the bone position holding unit 54 holds a history of the bone position information as the motion information of each user acquired by the reception unit 51.

The distribution unit 55 compresses and encrypts the motion information and the position information of the avatar corresponding to each user, converts the information into a data format to be transmitted via the network and the like, and generates the distribution data. The distribution unit 55 distributes the distribution data to the head mounted display terminal 1 via the network.

### <2. Operation of Each Device>

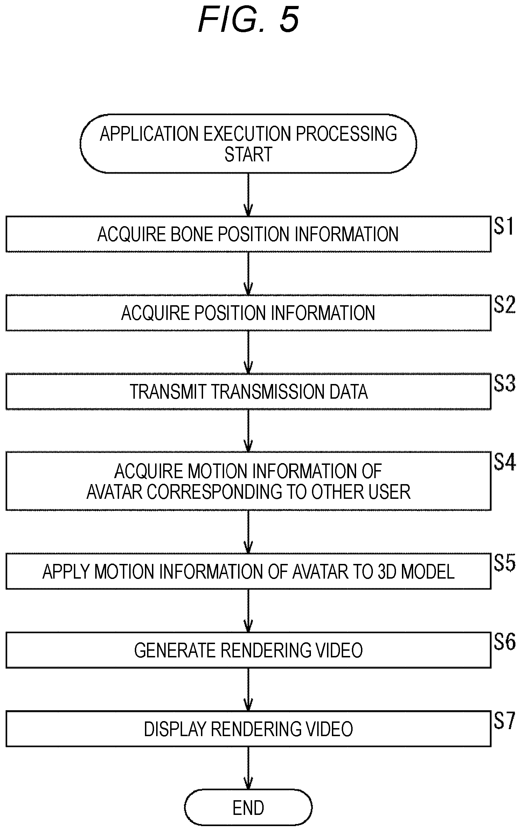

With reference to the flowchart in Fig. 5, application execution processing of the head mounted display terminal 1 will be described.

In step S1, the motion information processing unit 21 acquires the bone position information as the motion information of the user.

In step S2, the user position acquisition unit 32 acquires the position information of the avatar corresponding to the user, on the basis of the operation of which the input is received by the operation unit 22.

In step S3, the transmission data processing unit 12 compresses, encrypts, converts, or the like the motion information and the position information of the user so as to generate the transmission data and transmits the data to the server 2 via the network.

In step S4, the reception unit 13 acquires the motion information of the avatar corresponding to the other user. The motion information of the avatar is acquired, for example, by decoding or decompressing the distribution data distributed from the server 2.

In step S5, the rendering unit 41 applies the motion information of the avatar corresponding to the other user to the 3D model.

In step S6, the rendering unit 41 performs rendering and generates the rendering video indicating the virtual space viewed from the viewpoint of the user.

In step S7, the display unit 16 displays the rendering video.

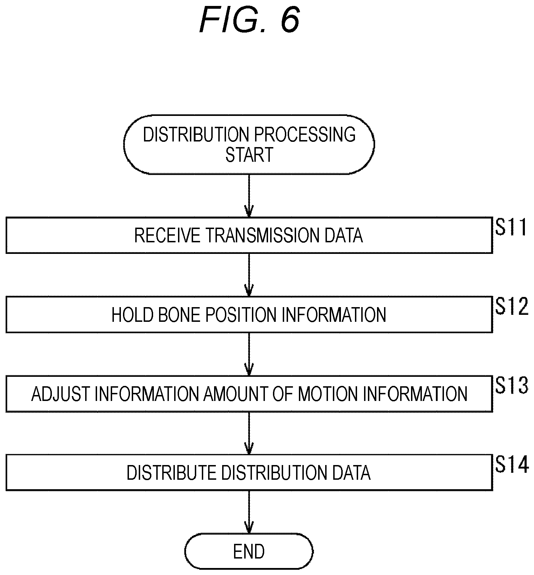

Next, distribution processing of the server 2 will be described with reference to the flowchart in Fig. 6.

In step S11, the reception unit 51 receives the transmission data transmitted from the head mounted display terminal 1 and decodes or decompresses the transmission data so as to acquire the motion information of the user.

In step S12, the bone position holding unit 54 holds the history of the bone position information as the motion information of the user.

In step S13, the adjustment unit 61 adjusts the information amount of the motion information of the avatar distributed by the distribution unit 55.

In step S14, the distribution unit 55 generates the distribution data, for example, by compressing, encrypting, or converting the motion information and the position information of the avatar and distributes the distribution data to the head mounted display terminal 1 via the network.

In the distribution processing of the server 2 described above, the information amount of the motion information of the avatar is adjusted in accordance with the distribution priority set on the basis of at least the motion information of the user, and the information is distributed to the head mounted display terminal 1.

For example, by setting the distribution priority on the basis of the motion amount of the joint, only bone position information of a joint with a large motion amount is distributed at a high frame rate. In this way, it is possible to reduce the information amount of the motion information of the avatar distributed to the head mounted display terminal 1 and reduce a load on the information processing system.

In general, a behavior of the avatar in a part with a large motion amount tends to be unnatural. Even if the information amount of the entire motion information is reduced, since the bone position information at the part where the behavior of the avatar is likely to be unnatural is distributed at a high frame rate, the head mounted display terminal 1 can naturally express the motion of the user using the avatar.

### <3. Modifications>

### ▪ First modification (example for distributing specific information from which type of motion of avatar can be specified)

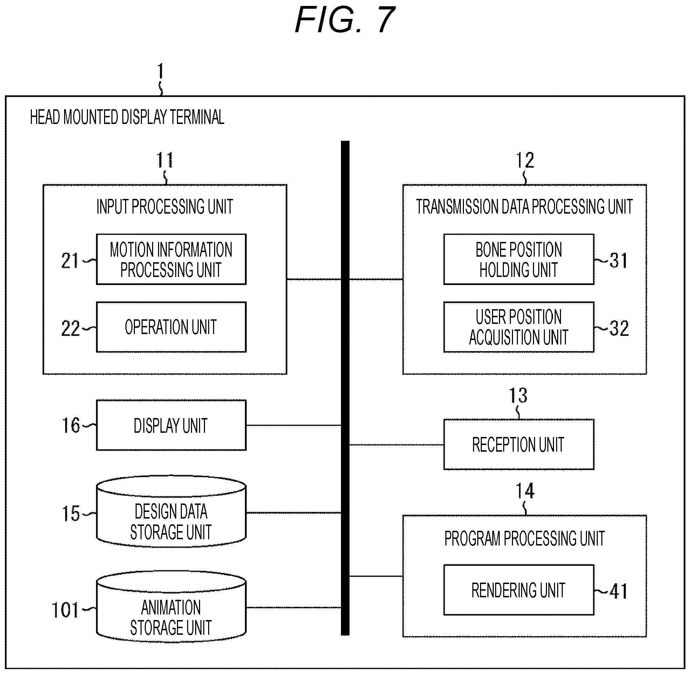

Fig. 7 is a block diagram illustrating a configuration example of the head mounted display terminal 1 according to a first modification. In Fig. 7, the same components as the components in Fig. 2 are denoted by the same reference signs. Redundant description will be omitted as appropriate.

The configuration of the head mounted display terminal 1 illustrated in Fig. 7 is different from the configuration of the head mounted display terminal 1 in Fig. 2 in that an animation storage unit 101 is provided.

The reception unit 13 decodes or decompresses the distribution data distributed from the server 2 and acquires the motion information and the position information of the avatar corresponding to the other user. Here, the motion information of the avatar specific information from which a type of the motion of the avatar can be specified.

The rendering unit 41 acquires animation data associated with the specific information acquired by the reception unit 13 from the animation storage unit 101 and applies the animation data to the 3D model of the avatar.

The animation storage unit 101 stores the specific information and the animation data created in advance to express a motion indicated by the specific information with the avatar in association with each other.

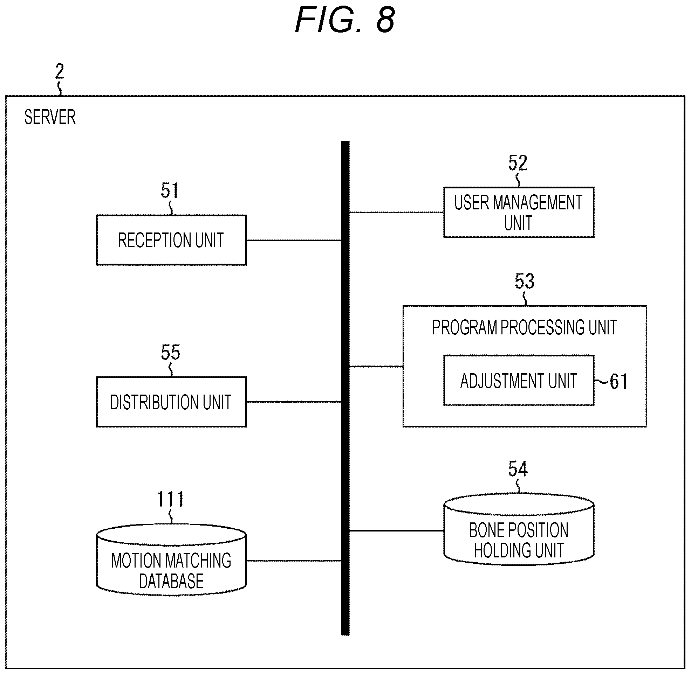

Fig. 8 is a block diagram illustrating a configuration example of the server 2 according to the first modification. In Fig. 8, the same components as the components in Fig. 3 are denoted by the same reference signs. Redundant description will be omitted as appropriate.

The configuration of the server 2 illustrated in Fig. 8 is different from the configuration of the server 2 in Fig. 3 in that a motion matching database 111 is provided.

The motion matching database 111 is created in advance by machine learning, and a type of a defined motion, for example, jumping, walking, running, waving a hand, or the like is registered in association with a feature amount of the motion information indicating the motion.

The adjustment unit 61 collates the motion information of the user acquired by the reception unit 51 and the feature amount of the motion information registered in the motion matching database 111 and estimates a type of a motion indicated by the motion information of the user. The adjustment unit 61 sets the specific information assigned to the type of the motion corresponding to the feature amount that matches the motion information of the user as the motion information of the avatar distributed by the distribution unit 55.

Note that the motion matching database 111 may be provided in the head mounted display terminal 1, and the specific information as the motion information of the user may be transmitted from the head mounted display terminal 1 to the server 2.

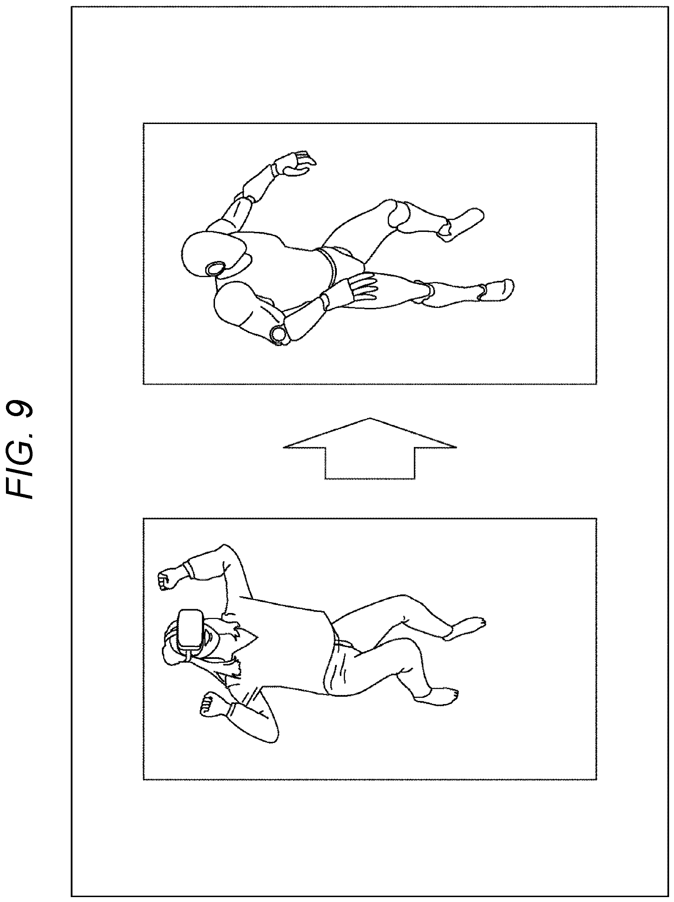

Fig. 9 is a diagram illustrating a state of motions of the user and the avatar.

As illustrated on a left side in Fig. 9, it is assumed that the user jumps in a state of raising both arms. In this case, specific information assigned to a jump action is distributed from the server 2 to the head mounted display terminal 1.

In the head mounted display terminal 1 that has received the distribution data including the specific information, animation data that makes the avatar make a jump action is applied to the 3D model. As a result, as illustrated on a right side in Fig. 9, in the virtual space, the avatar makes a jump action, for example, in a state where both arms are lowered.

Since the avatar makes an action on the basis of the created action data, it is not possible to accurately express the motion of the user. However, the viewer can roughly grasp what action the other user makes.

As can be understood that the information amount of the motion information of the avatar is obtained by a product of the number of joints, the type of the motion information (joint position and joint angle), and the distribution frequency, when the bone position information of each joint is distributed as the motion information of the avatar, the information amount of the motion information of the avatar increases. By distributing only the specific information such as an ID from which the type of the motion of the avatar can be specified, as the motion information of the avatar, the server 2 can significantly reduce the information amount of the motion information of the avatar to be distributed to the head mounted display terminal 1 and reduce the load on the information processing system.

Note that, in a case where the type of the motion corresponding to the motion information of the user is not registered in the motion matching database 111, the motion information of the avatar adjusted in accordance with the distribution priority set on the basis of the motion information of the user is distributed by the distribution unit 55.

### ▪ Second modification (example for adjusting information amount of motion information in accordance with motion of user)

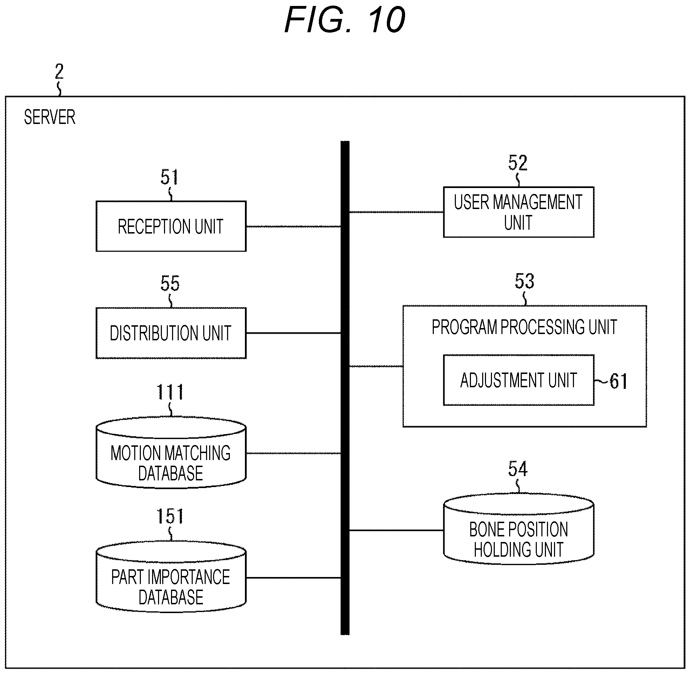

Fig. 10 is a block diagram illustrating a configuration example of the server 2 according to a second modification. In Fig. 10, the same components as the components in Fig. 8 are denoted by the same reference signs. Redundant description will be omitted as appropriate.

The configuration of the server 2 illustrated in Fig. 10 is different from the configuration of the server 2 in Fig. 8 in that a part importance database 151 is provided.

In the part importance database 151, importance of each part of a body in a motion of the user is registered.

The adjustment unit 61 collates the motion information of the user acquired by the reception unit 51 and the feature amount of the motion information registered in the motion matching database 111 and estimates a type of a motion indicated by the motion information of the user.

The adjustment unit 61 acquires the importance of each part of the body in the motion of the type corresponding to the feature amount that matches the motion information of the user, from the part importance database 151. The adjustment unit 61 sets the distribution priority in accordance with the importance of each part of the body and adjusts the distribution frequency of the motion information of the avatar for each joint of the avatar, in accordance with the set distribution priority.

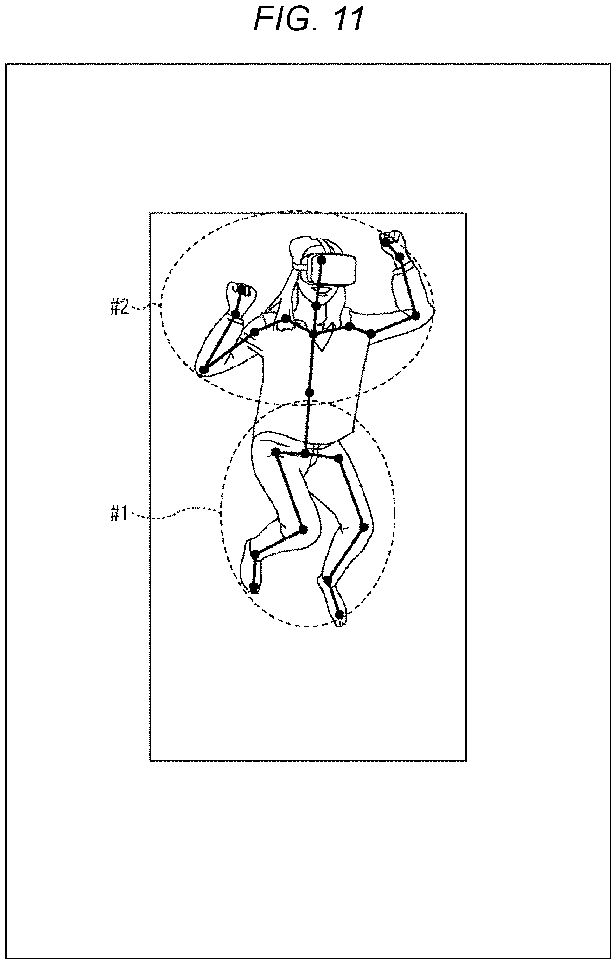

Fig. 11 is a diagram illustrating an example of the importance of each part of the body.

As illustrated in Fig. 11, it is assumed that the user be jumping. For example, a lower body indicated and surrounded by an ellipse #1 is defined as an important part for reproducing a jump action, an upper body indicated and surrounded by an ellipse #2 is defined as an unimportant part for reproducing the jump action.

In this case, the adjustment unit 61 sets a distribution priority of a joint included in the lower body of the avatar to be high, and the distribution unit 55 distributes bone position information of the joint at a high frame rate. Furthermore, the adjustment unit 61 sets a distribution priority of a joint included in the upper body of the avatar to be low, and the distribution unit 55 distributes bone position information of the joint at a low frame rate.

As described above, by setting the distribution priority of each joint of the avatar on the basis of the type of the motion of the user, it is possible to reduce the information amount of the motion information to be distributed to the head mounted display terminal 1 and reduce the load on the information processing system.

Since the motion information regarding the joint included in the important part for reproducing the motion of the user by the avatar is distributed at a high frame rate, the head mounted display terminal 1 can naturally express the motion of the user using the avatar.

### ▪ Third modification (example for adjusting information amount of motion information in accordance with display mode of avatar)

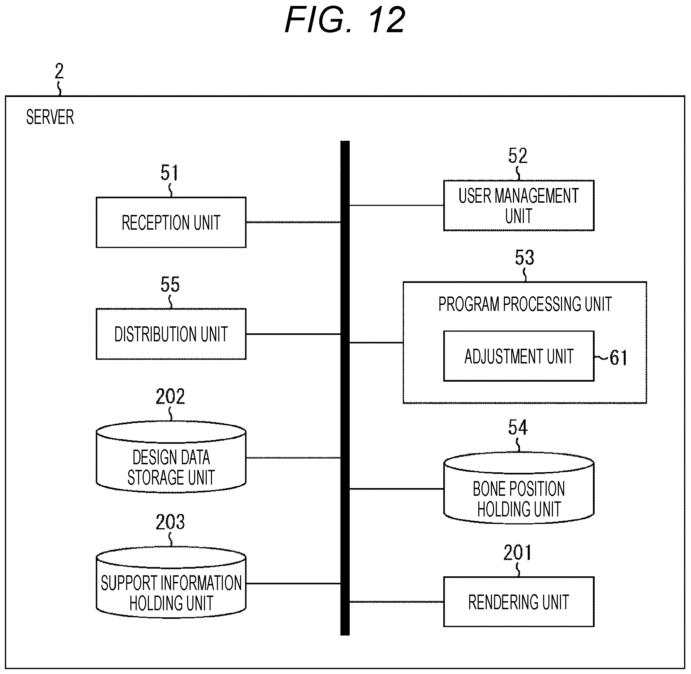

Fig. 12 is a block diagram illustrating a configuration example of the server 2 according to a third modification. In Fig. 12, the same components as the components in Fig. 3 are denoted by the same reference signs. Redundant description will be omitted as appropriate.

The configuration of the server 2 illustrated in Fig. 12 is different from the configuration of the server 2 in Fig. 3 in that a rendering unit 201, a design data storage unit 202, and a support information holding unit 203 are provided.

The rendering unit 201 applies the motion information of the user acquired by the reception unit 13 to a 3D model of an avatar read from the design data storage unit 202. The rendering unit 201 performs rendering for obtaining support information used to support a rendering operation (reduce operation load) in the head mounted display terminal 1. The support information is obtained as a display mode of the avatar arranged in the virtual space on the basis of the position information of the avatar, specifically, information indicating visibility of the avatar in the virtual space.

For example, as the support information, the rendering unit 201 obtains any one of information indicating whether or not a shielding object exists between the viewpoint of the viewer and each joint of the avatar, information indicating an amount of light reaching the avatar, and information indicating a display area of the avatar displayed on the head mounted display terminal 1. The support information obtained by the rendering unit 201 is held by the support information holding unit 203.

The adjustment unit 61 reads the support information from the support information holding unit 203 and sets the distribution priority on the basis of the support information. In other words, the adjustment unit 61 sets the distribution priority, on the basis of the display mode of each avatar from the viewpoint of the viewer who uses the head mounted display terminal 1. Then, the adjustment unit 61 adjusts the information amount of the motion information of the avatar, in accordance with the set distribution priority. The adjustment unit 61 sets only bone position information of a joint that is easily viewed from the viewer as the motion information of the avatar distributed by the distribution unit 55, for example, on the basis of the support information. Furthermore, for example, the adjustment unit 61 sets a frame rate at which the bone position information of the joint that is easily viewed from the viewer to be low.

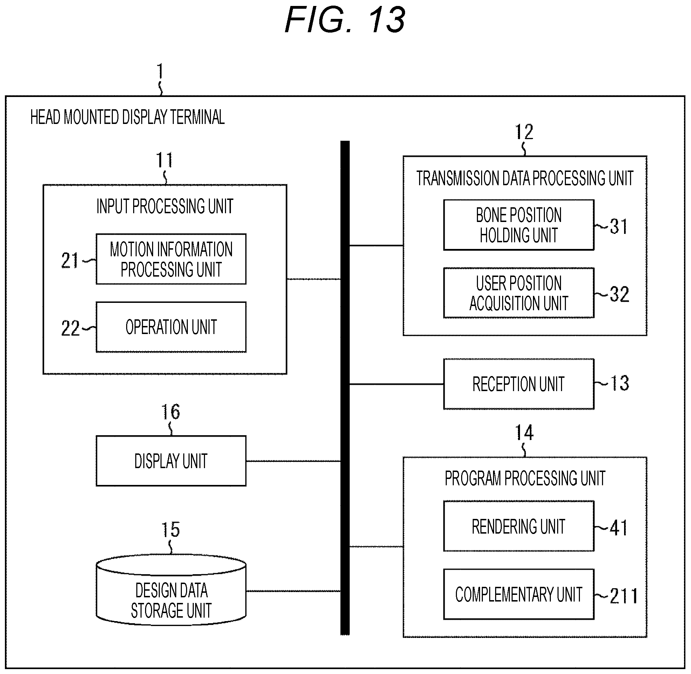

Fig. 13 is a block diagram illustrating a configuration example of the head mounted display terminal 1 according to the third modification. In Fig. 13, the same components as the components in Fig. 2 are denoted by the same reference signs. Redundant description will be omitted as appropriate.

The configuration of the head mounted display terminal 1 illustrated in Fig. 13 is different from the configuration of the head mounted display terminal 1 in Fig. 2, in that a complementary unit 211 is provided in the program processing unit 14.

In a case where only the bone position information of the joint that is easily viewed from the viewer is distributed from the server 2 as the motion information of the avatar, the complementary unit 211 complements bone position information of another joint, on the basis of the bone position information of the joint.

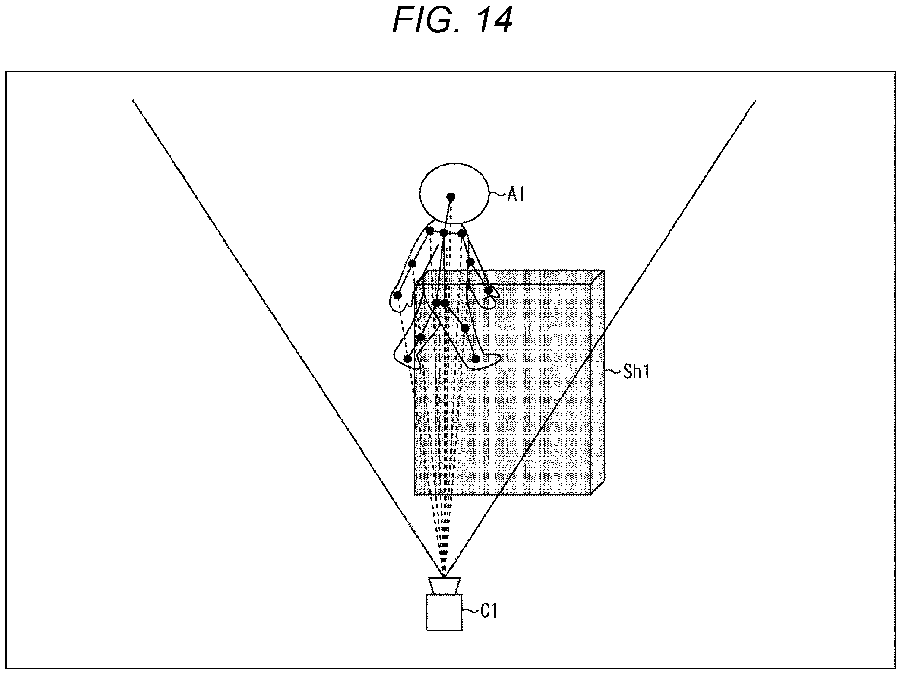

Fig. 14 is a diagram illustrating an example of a method for obtaining the support information indicating whether or not the shielding object exists between the viewpoint of the viewer and each joint of the avatar.

The support information indicating whether or not the shielding object exists between the viewpoint of the viewer and each joint of the avatar is obtained, for example, as a result of a Z test about each joint position of the avatar. From the Z test, a front-back relationship of the 3D model of the avatar or the object is determined.

First, the rendering unit 201 arranges 3D models of all avatars to which the motion information of the user is applied and the 3D model of the object in the virtual space. Next, as illustrated in Fig. 14, the rendering unit 201 determines whether or not a 3D model of an avatar other than an avatar A1 or an object is arranged between on straight lines connecting a viewpoint C1 of a viewer to be a reference of rendering and joint positions indicated by circles on the avatar A1 corresponding to another user.

In the example in Fig. 14, a shielding object Sh1 is arranged between a joint other than the joints of the right hand and the left foot of the avatar A1 and the viewpoint C1. In this case, the adjustment unit 61 sets distribution priorities of the right hand and the left foot that do not have the shielding object Sh1 between the viewpoint C1 and the right hand and the left foot to be high, and the distribution unit 55 distributes only bone position information of the right hand and the left foot.

The rendering unit 201 performs the Z test about a viewpoint of a single viewer on joints of avatars corresponding to all the other users and obtains the support information.

In a case where there is a shielding object between the viewpoint of the viewer and the avatar, the motion information of the avatar is not used for rendering performed by the head mounted display terminal 1 used by the viewer. Therefore, the distributed motion information of the avatar is wasted. By setting the distribution priority of the joint having no shielding object between the viewpoint of the viewer and the joint to be high and distributing only the bone position information of the joint, it is possible to reduce the information amount of the motion information of the avatar to be distributed to the head mounted display terminal 1.

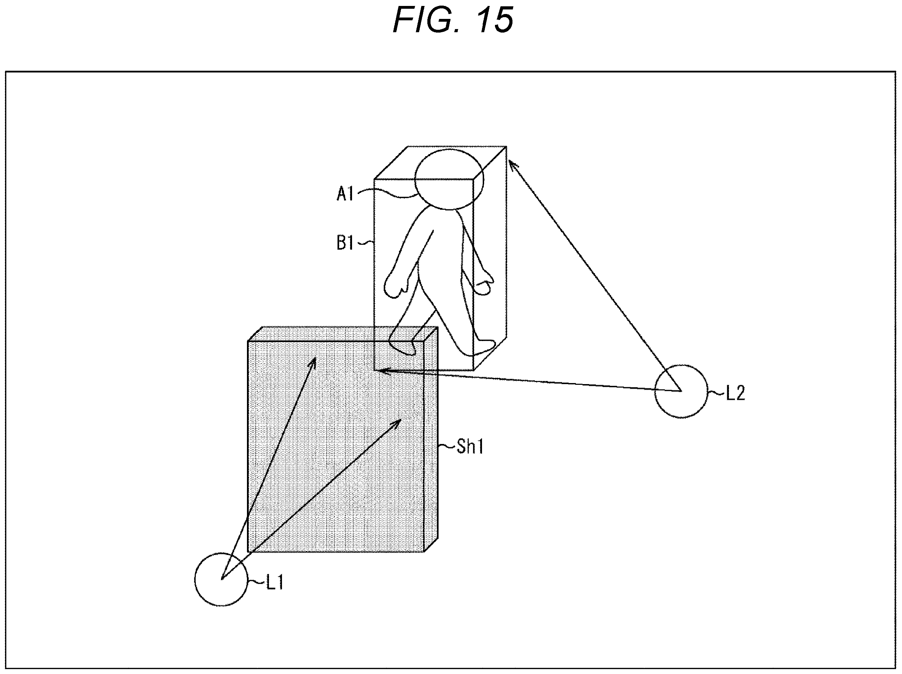

Fig. 15 is a diagram illustrating an example of a method for obtaining support information indicating an amount of light reaching the avatar.

The support information indicating the amount of the light reaching the avatar is obtained, for example, as a result of ray tracing for determining whether or not a light beam from a light passes through a rectangular parallelepiped indicating a region where the avatar exists.

First, the rendering unit 201 arranges the 3D models of all the avatars to which the motion information of the user is applied and the 3D model of the object in the virtual space, and executes lighting processing. Next, as illustrated in Fig. 15, the rendering unit 201 determines whether or not light reaches a rectangular parallelepiped B1, when light is projected from lights L1 and L2 provided in the virtual space toward the rectangular parallelepiped B1 surrounding the entire avatar A1.

In the example in Fig. 15, the light from the light L1 is shielded by the shielding object Sh1 and does not reach the rectangular parallelepiped B1, and the light from the light L2 reaches the rectangular parallelepiped B1.

The rendering unit 201 obtains a value obtained by adding the amounts of the light reaching the rectangular parallelepiped B1 as the amount of the light reaching the avatar. In a case where the amount of the light reaching the avatar is small, the adjustment unit 61 sets the distribution priority for the avatar to be low, and reduces the number of joints of which bone position information is distributed or sets a bit rate at which the motion information of the avatar is distributed to be low.

It is difficult for the viewer to visually recognize an avatar to which the light from the light does not reach. In a case where motion information of the avatar that is difficult to be visually recognized is reduced, unnaturalness that the viewer feels about the avatar is less than that in a case where motion information of the avatar that is easy to be visually recognized is reduced.

Therefore, by setting the distribution priority of the avatar of which the reaching light amount is small to be low and reducing an information amount of the motion information of the avatar, this prevents the viewer from feeling unnaturalness, and it is possible to reduce the information amount of the motion information of the avatar to be distributed to the head mounted display terminal 1.

Note that, in Fig. 15, description has been made as assuming that the single rectangular parallelepiped B1 surrounding the avatar A1 indicates the region where the avatar A1 exists. However, a plurality of rectangular parallelepipeds surrounding each part of the avatar A1 can indicate the region where the avatar A1 exists.

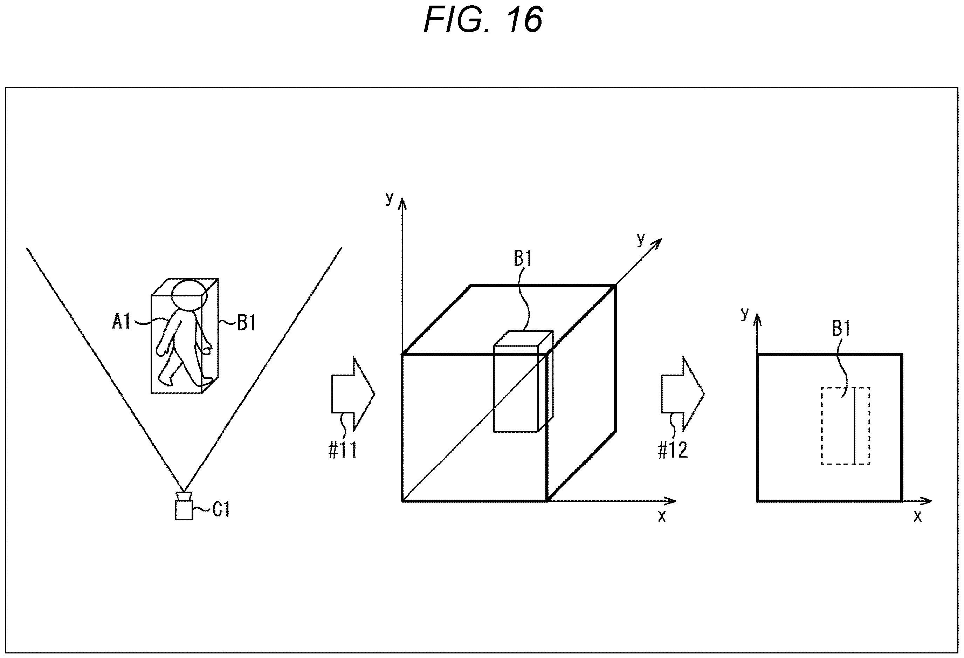

Fig. 16 is a diagram illustrating an example of a method for obtaining support information indicating a display area of the avatar.

The support information indicating the display area of the avatar displayed on the head mounted display terminal 1 is, for example, obtained as a result of processing for calculating an area when a rectangular parallelepiped indicating the region where the avatar exists is projected on an image space.

First, the rendering unit 201 arranges a rectangular parallelepiped surrounding each of the 3D models of all the avatars to which the motion information of the user is applied in the virtual space. On the left side in Fig. 16, the rectangular parallelepiped B1 surrounding the avatar A1 is arranged in the virtual space.

As indicated by an arrow #11, the rendering unit 201 converts the virtual space in which the rectangular parallelepiped B1 is arranged into a normalized projection space. Thereafter, as indicated by an arrow #12, the rendering unit 201 converts the normalized projection space into an image space viewed from the viewpoint C1 of the viewer. The rendering unit 201 assumes an area of the rectangular parallelepiped B1 projected in the image space as the support information.

In a case where the display area of the avatar is small, the adjustment unit 61 sets the distribution priority for the avatar to be low, and reduces the number of joints of which bone position information is distributed or sets a bit rate at which the motion information of the avatar is distributed to be low.

As the display area becomes smaller, it is more difficult for the viewer to visually recognize the avatar. In a case where motion information of the avatar that is difficult to be visually recognized is reduced, unnaturalness that the viewer feels about the avatar is less than that in a case where motion information of the avatar that is easy to be visually recognized is reduced.

Since the display area of the avatar is determined on the basis of a size and a distance of the avatar, in a case where the avatar is large, even if the distance from the avatar is long, there is a possibility that the avatar is displayed to be large in the rendering video. For example, an avatar with a size of 50 m arranged 50 m ahead from the viewpoint of the viewer and an avatar with a size of 2 m arranged 2 m ahead from the viewpoint of the viewer are displayed with the same size in the rendering video.

Patent Document 1 describes that the information amount of the motion information is changed in accordance with the distance between the viewpoint of the viewer and the avatar. However, information amounts of respective pieces of motion information of the avatars having the size of 2 m and the size of 50 m displayed with the same size in the rendering video should be the same amount.

The server 2 according to the present technology prevents the viewer from feeling unnaturalness, by reducing the information amount of the motion information of the avatar in accordance with the distribution priority set on the basis of the display area, and can reduce the information amount of the motion information to be distributed to the head mounted display terminal 1.

Note that, in Fig. 16, description has been made as assuming that the single rectangular parallelepiped B1 surrounding the avatar A1 indicates the region where the avatar A1 exists. However, a plurality of rectangular parallelepipeds surrounding each part of the avatar A1 can indicate the region where the avatar A1 exists.

### ▪ Fourth modification (example of adjusting information amount of motion information in accordance with relationship between viewer and user)

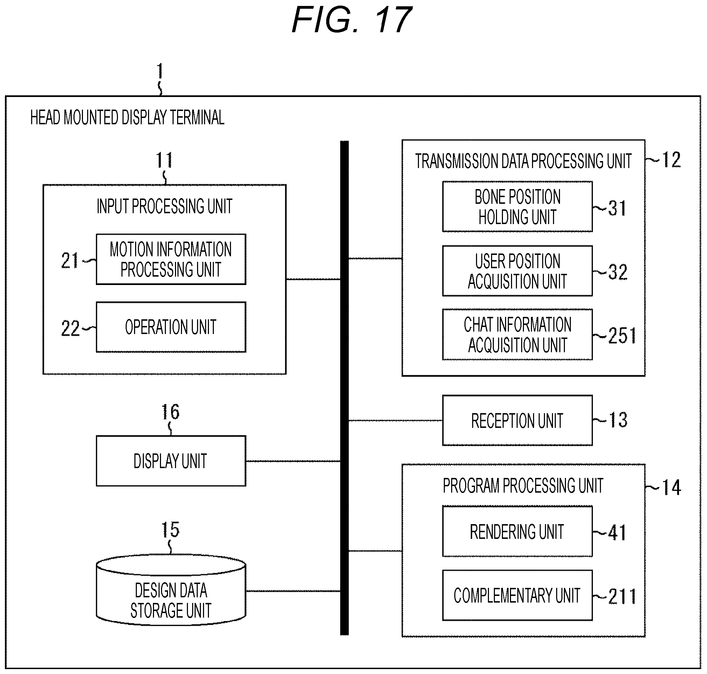

Fig. 17 is a block diagram illustrating a configuration example of the head mounted display terminal 1 according to a fourth modification. In Fig. 17, the same components as the components in Fig. 13 are denoted by the same reference signs. Redundant description will be omitted as appropriate.

The configuration of the head mounted display terminal 1 illustrated in Fig. 17 is different from the configuration of the head mounted display terminal 1 in Fig. 13 in that a chat information acquisition unit 251 is provided in the transmission data processing unit 12.

The chat information acquisition unit 251 acquires chat information indicating a statement of a user. In a case where voice chat is performed between the user and another user, voice data is acquired from a microphone provided in the head mounted display terminal 1 as the chat information. In a case where text chat is performed between the user and another user, text data based on an operation of which input is received by the operation unit 22 is acquired as the chat information.

The transmission data processing unit 12 compresses or encrypts the motion information, the position information, and the chat information of the user, converts the information into a data format to be transmitted via the network or the like, and generates transmission data.

The reception unit 13 decodes or decompresses the distribution data and acquires the motion information, the position information, and the chat information of the avatar corresponding to the other user.

The program processing unit 14 presents the chat information acquired by the reception unit 13 to the user. In a case where the voice chat is performed between the user and another user, a voice based on the voice data is output from a speaker provided in the head mounted display terminal 1. In a case where the text chat is performed between the user and another user, text based on the text data is displayed on the display unit 16.

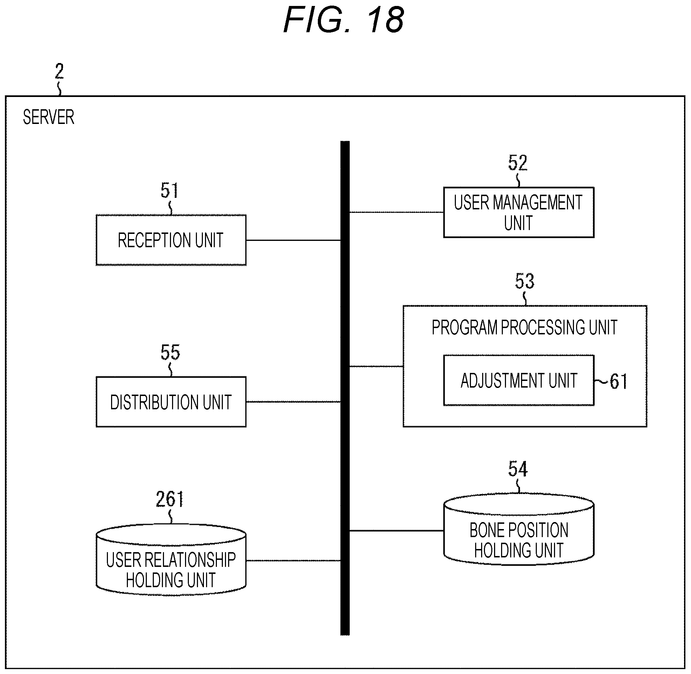

Fig. 18 is a block diagram illustrating a configuration example of the server 2 according to the fourth modification. In Fig. 18, the same components as the components in Fig. 3 are denoted by the same reference signs. Redundant description will be omitted as appropriate.

The configuration of the server 2 illustrated in Fig. 18 is different from the configuration of the server 2 in Fig. 3 in that a user relationship holding unit 261 is provided.

The reception unit 51 decodes or decompresses the transmission data and acquires the motion information, the position information, and the chat information of the user.

In a multiplay application, there is a case where a plurality of users forms a group and act together. Furthermore, in the multiplay application, a user who has connection such as communicating or forming a group is registered in a friend list.

The user relationship holding unit 261 holds a relevance degree between users obtained by the server 2 on the basis of the friend list indicating the group to which each user belongs and the connection between the users.

Furthermore, the number of times when the users have contact with each other or are close to each other or a time elapsed from when the users have contact with each other in the virtual space is obtained by the server 2 and is held by the user relationship holding unit 261. The number of times when the users have contact with each other or are close to each other or the time elapsed from when the users have contact with each other is a single index indicating a relationship between the users.

By holding these pieces of information by the user relationship holding unit 261 for a predetermined period, it is possible to omit calculation of the relevance degree between the users or the like for each frame.

The adjustment unit 61 reads the relevance degree between the users, the number of times when the users have contact with each other or are close to each other, and the time elapsed from when the users have contact with each other from the user relationship holding unit 261 and sets the distribution priority on the basis of these pieces of information. The adjustment unit 61 adjusts the information amount of the motion information of the avatar, in accordance with the set distribution priority.

Specifically, since there is a high possibility that an avatar corresponding to a user who has a strong relationship with the viewer is positioned in a field of view of the viewer, the adjustment unit 61 sets a frame rate at which the motion information of the avatar corresponding to the user who has the strong relationship with the viewer is distributed to be high. On the other hand, the adjustment unit 61 reduces an information amount of motion information of an avatar corresponding to a user having a weak relationship with the viewer.

For example, an avatar corresponding to a user who belongs to the same group as the viewer is likely to be positioned in the field of view of the viewer, and the viewer and the user may often communicate with each other. Therefore, the adjustment unit 61 sets a distribution priority of the avatar corresponding to the user who belongs to the same group as the viewer to be high.

The adjustment unit 61 can adjust the information amount of the motion information of the avatar in accordance with a distribution priority set on the basis of an attention degree from the plurality of viewers with respect to each user. For example, the attention degree of the user is estimated on the basis of the number of viewers having the avatar corresponding to the user in the field of view.

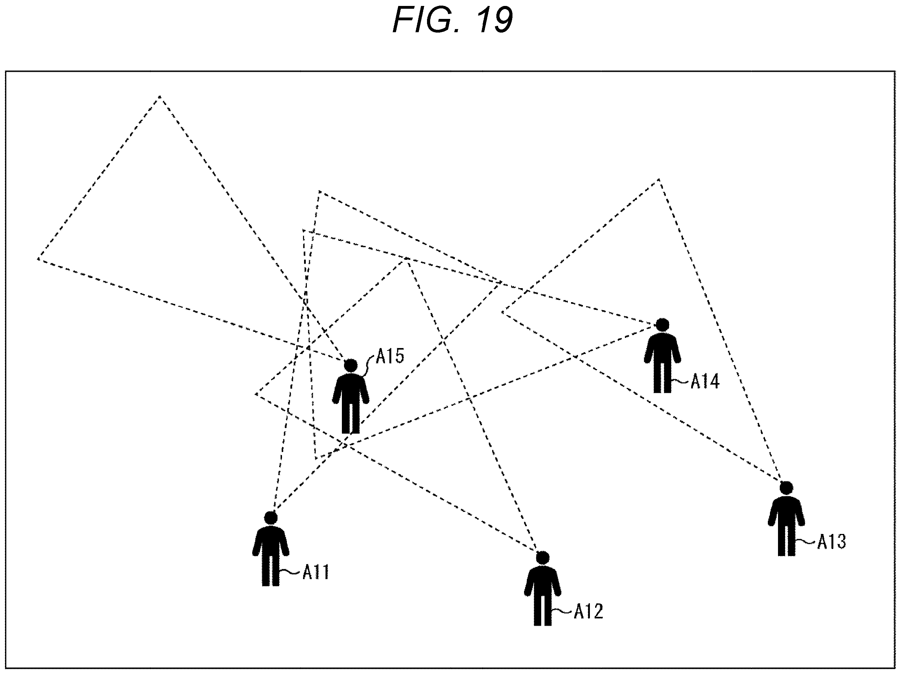

Fig. 19 is a diagram illustrating an example of estimating the attention degree.

As illustrated in Fig. 19, it is assumed that avatars A11 to A15 corresponding to five users exist in the virtual space. In Fig. 19, a field of view of each of the avatars A11 to A15 is indicated by a broken triangle.

In the example in Fig. 19, since all of the avatars A11 to A13 are not included in the field of view of any user, attention degrees of the avatars A11 to A13 are estimated to be low. Therefore, the adjustment unit 61 sets distribution priorities of the avatars A11 to A13 with the low attention degree to be low.

Furthermore, since the avatar A14 is included in the field of view of the user corresponding to the avatar A13, an attention degree of the avatar A14 is estimated to be about medium. Therefore, the adjustment unit 61 sets a distribution priority of the avatar A14 of which the attention degree is about medium to be about medium.

Since the avatar A15 is included in the fields of view of the users corresponding to the avatars A11, A12, and A14, an attention degree of the avatar A15 is estimated to be high. Therefore, the adjustment unit 61 sets a distribution priority of the avatar A15 with the high attention degree to be high.

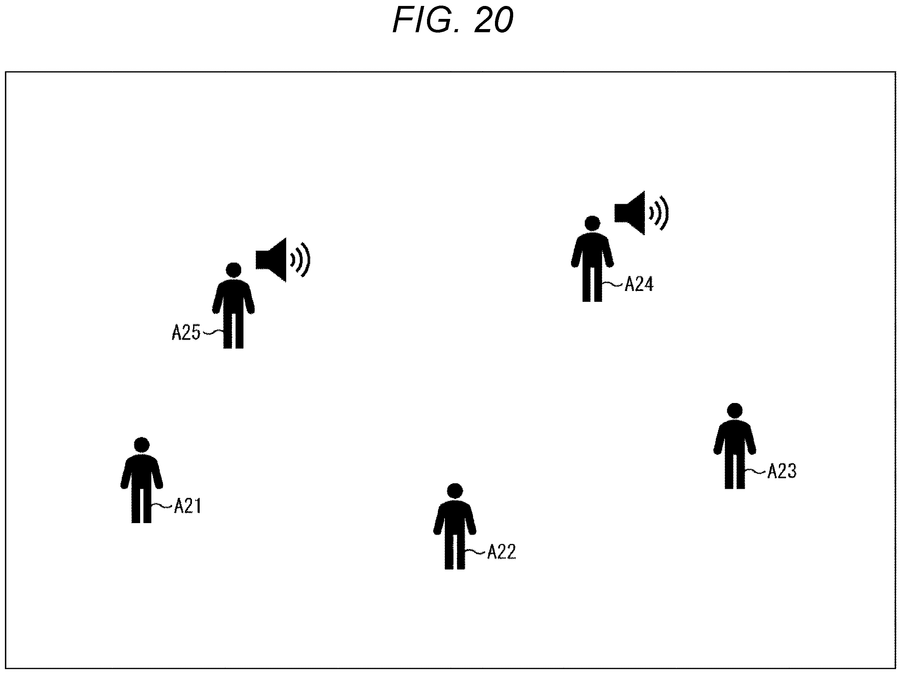

Fig. 20 is a diagram illustrating another example of the method for estimating the attention degree.

The attention degree of the user may be estimated on the basis of whether or not a user has made a statement using a chat.

As illustrated in Fig. 20, it is assumed that avatars A21 to A25 corresponding to five users exist in the virtual space.

In the example in Fig. 20, since the avatars A21 to A23 do not make statements using the chat, there is a low possibility that the avatars A21 to A23 are viewed from other users, and attention degrees of the avatars A21 to A23 are estimated to be low. Therefore, the adjustment unit 61 sets distribution priorities of the avatars A21 to A23 with the low attention degree to be low.

Furthermore, since the avatars A24 and A25 make statements using the chat, there is a high possibility that the avatars A24 and A25 are viewed from the other users, and attention degrees of the avatars A24 and A25 are estimated to be high. Therefore, the adjustment unit 61 sets distribution priorities of the avatars A24 and A25 with the high attention degree to be high.

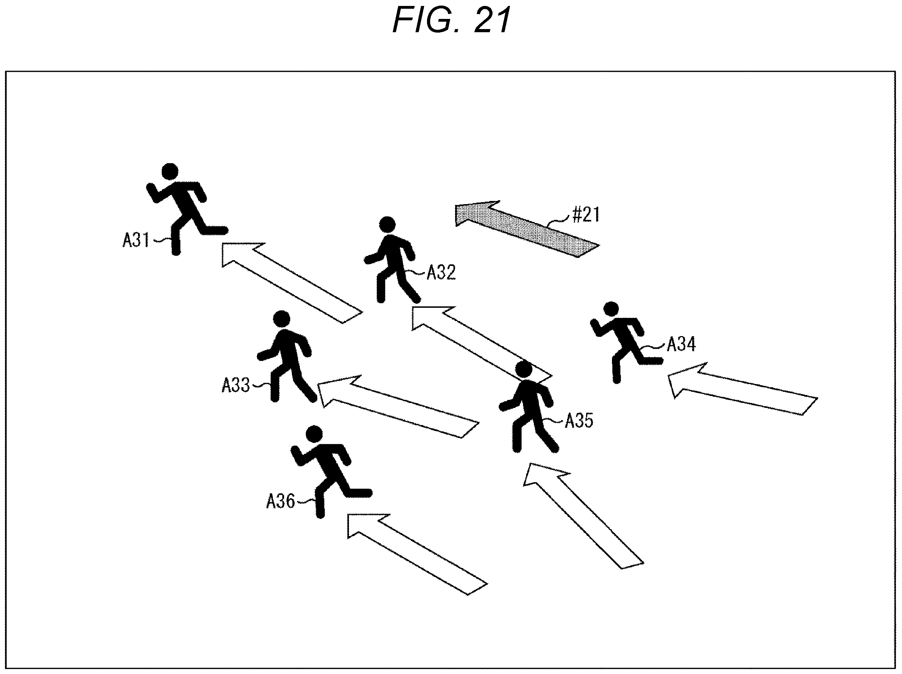

Fig. 21 is a diagram illustrating still another example of the method for estimating the attention degree.

The attention degree of the user may be estimated on the basis of a route or a direction along with a plurality of avatars moves in the virtual space.

In a case where a plurality of users acts for a common purpose such as going to a specific place, searching for a specific object, or chasing a specific object, it is considered that a certain degree of group action is performed, regardless of a group to which each user belongs.

As illustrated in Fig. 21, it is assumed that avatars A31 to A36 corresponding to six users move in the virtual space. Arrows toward the avatars A31 to A36 indicate moving routes of the respective avatars.

The server 2 holds moving routes of the avatars A31 to A36 within a certain period, and obtains an average moving route and moving direction of a group including the avatars A31 to A36. In the example in Fig. 21, an arrow #21 indicates a moving direction of the group.

The adjustment unit 61 estimates that the avatar A31 is positioned at a head of the group, on the basis of the moving route and the moving direction of the group. Here, it is considered that the avatar A31 positioned at the head of the group is highly likely to be included in the field of view of the other user, that is, has a high attention degree. Therefore, the adjustment unit 61 sets a distribution priority of the avatar A31 to be high.

Note that, in a case where a plurality of avatars is positioned near the head of the group, a distribution priority of each of the plurality of avatars may be set to be high. In a case where an average of the moving direction of the group of the avatar is not converged into a single direction, such as a case where the users individually act, the adjustment unit 61 determines that there is no user with a high attention degree and does not adjust the information amount of the motion information.

As described above, the server 2 according to the present technology adjusts the information amount of the motion information of the avatar to be distributed to the head mounted display terminal 1, in accordance with the relationship between the users or the attention degree of the user.

A possibility that a viewer views an avatar corresponding to a user with a low value for the viewer such as a user with a weak relationship or a user with a less attention is lowered. By reducing an information amount of motion information of the avatar corresponding to the user with the low value for the viewer, it is possible to prevent the viewer from feeling unnaturalness and to reduce the information amount of the motion information of the avatar to be distributed to the head mounted display terminal 1.

### ▪ Others

In the above, an example has been described in which the head mounted display terminal 1 performs virtual reality (VR) display for displaying the rendering video indicating the virtual space in which the avatar that reflects the motion of another user is arranged. The head mounted display terminal 1 may perform augmented reality (AR) display for superimposing and displaying the avatar corresponding to the other user on a captured image obtained by imaging a space where the viewer actually stays.

### ▪ Computer

The series of processing described above can be executed by hardware or by software. In a case where the series of processing is executed by software, a program included in the software is installed from a program recording medium to a computer incorporated in dedicated hardware, a general-purpose personal computer, or the like.

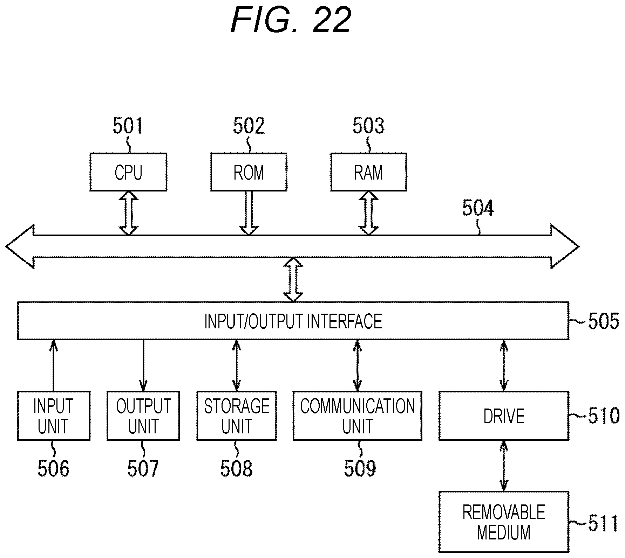

Fig. 22 is a block diagram illustrating a configuration example of the hardware of the computer which executes the above-described series of processing by the program. The server 2 includes, for example, a PC having a similar configuration to the configuration illustrated in Fig. 22.

A central processing unit (CPU) 501, a read only memory (ROM) 502, and a random access memory (RAM) 503 are mutually connected by a bus 504.

An input/output interface 505 is further connected to the bus 504. An input unit 506 including a keyboard, a mouse, and the like, and an output unit 507 including a display, a speaker, and the like are connected to the input/output interface 505. Furthermore, a storage unit 508 including a hard disk, a nonvolatile memory, and the like, a communication unit 509 including a network interface and the like, and a drive 510 that drives a removable medium 511 are connected to the input/output interface 505.

In the computer configured as described above, for example, the CPU 501 loads a program stored in the storage unit 508 into the RAM 503 via the input/output interface 505 and the bus 504 and executes the program to execute the above-described series of processing.

For example, the program to be executed by the CPU 501 is recorded in the removable medium 511, or provided via a wired or wireless transmission medium such as a local area network, the Internet, or digital broadcasting, and then installed in the storage unit 508.

The program executed by the computer may be a program in which the processing is executed in time series in the order described herein, or may be a program in which the processing is executed in parallel or at a necessary timing such as when a call is made.

Note that, here, a system means an assembly of a plurality of components (devices, modules (parts), and the like), and it does not matter whether or not all the components are located in the same housing. Therefore, a plurality of devices housed in separate housings and coupled via a network and one device in which a plurality of modules is housed in one housing are both systems.

Note that the effects described herein are only examples, and the effects of the present technology are not limited to these effects. Additional effects may also be obtained.

Embodiments of the present technology are not limited to the above-described embodiments, and various changes can be made without departing from the scope of the present technology.

For example, the present technology may be configured as cloud computing in which a function is shared by a plurality of devices via the network to process together.

Furthermore, each step described in the above-described flowchart may be executed by one device or shared by a plurality of devices to be executed.

Moreover, in a case where a plurality of types of processing is included in one step, the plurality of types of processing included in one step may be executed by one device or shared by a plurality of devices to be executed.

### <Examples of Configuration Combination>

The present technology can have the following configurations.

(1) A distribution device including:
   a reception unit that receives first motion information indicating a motion of a user;
   a distribution unit that distributes second motion information indicating a motion of an avatar corresponding to the user, to a terminal that displays the avatar; and
   an adjustment unit that adjusts an information amount of the second motion information distributed by the distribution unit in accordance with the first motion information.
(2) The distribution device according to (1), in which
   the adjustment unit adjusts the information amount of the second motion information in accordance with a distribution priority set on the basis of at least the first motion information.
(3) The distribution device according to (2), in which
   the first motion information includes information indicating a position and an angle of a joint of the user, and
   the second motion information includes information indicating a position and an angle of a joint of the avatar corresponding to the joint of the user.
(4) The distribution device according to (3), in which the adjustment unit adjusts the information amount of the second motion information, in accordance with the distribution priority set on the basis of change amounts of the position and the angle of the joint of the user indicated by the first motion information.
(5) The distribution device according to (4), in which
   the adjustment unit adjusts a distribution frequency of the second motion information in accordance with the distribution priority, for each joint of the avatar.
(6) The distribution device according to any one of (2) to (5), in which
   in a case where a type of the motion of the user indicated by the first motion information is a predefined type, the adjustment unit sets specific information that allows to specify a type of the motion of the avatar corresponding to the type of the motion of the user by the terminal, as the second motion information distributed by the distribution unit.
(7) The distribution device according to any one of (3) to (5), in which
   the adjustment unit adjusts the distribution frequency of the second motion information for each joint of the avatar, in accordance with the distribution priority set on the basis of a type of the motion of the user indicated by the first motion information.
(8) The distribution device according to any one of (2) to (7), in which
   the adjustment unit adjusts the information amount of the second motion information, in accordance with the distribution priority set on the basis of a display mode of the avatar from a viewpoint of a viewer who uses the terminal.
(9) The distribution device according to (8), in which
   the adjustment unit adjusts the information amount of the second motion information, in accordance with the distribution priority set on the basis of whether or not there is a shielding object between the viewpoint of the viewer.
(10) The distribution device according to (8) or (9), in which
   the adjustment unit adjusts the information amount of the second motion information, in accordance with the distribution priority set on the basis of an amount of light reaching the avatar.
(11) The distribution device according to any one of (8) to (10), in which
   the adjustment unit adjusts the information amount of the second motion information, in accordance with the distribution priority set on the basis of a display area of the avatar displayed on the terminal.
(12) The distribution device according to any one of (2) to (11), in which
   the adjustment unit adjusts the information amount of the second motion information, in accordance with the distribution priority set on the basis of a relationship between the viewer who uses the terminal and the user.
(13) The distribution device according to (12), in which
   the adjustment unit adjusts the information amount of the second motion information, in accordance with the distribution priority set on the basis of a group to which the viewer belongs.
(14) The distribution device according to (12) or (13), in which
   the adjustment unit adjusts the information amount of the second motion information, in accordance with the distribution priority set on the basis of a list indicating connection between the user and the viewer.
(15) The distribution device according to any one of (12) to (14), in which
   the adjustment unit adjusts the information amount of the second motion information, in accordance with the distribution priority set on the basis of the number of times when the user and the viewer have contact with each other or are close to each other in a virtual space or a time elapsed from when the user and the viewer have contact with each other.
(16) The distribution device according to any one of (12) to (15), in which
   the adjustment unit adjusts the information amount of the second motion information, in accordance with the distribution priority set on the basis of the number of viewers including the avatar in a field of view.
(17) The distribution device according to any one of (12) to (16), in which
   the adjustment unit adjusts the information amount of the second motion information, in accordance with the distribution priority set on the basis of whether or not the user makes a statement.
(18) The distribution device according to any one of (12) to (17), in which
   the adjustment unit adjusts the information amount of the second motion information, in accordance with the distribution priority set on the basis of routes or directions in which a plurality of the avatars moves in the virtual space.
(19) A distribution method including:
   by a distribution device,
   receiving first motion information indicating a motion of a user;
   adjusting an information amount of second motion information indicating a motion of an avatar, distributed to a terminal that displays the avatar corresponding to the user; and
   distributing the second motion information to the terminal.
(20) A program for causing a computer to execute processing including:
   receiving first motion information indicating a motion of a user;
   adjusting an information amount of second motion information indicating a motion of an avatar, distributed to a terminal that displays the avatar corresponding to the user; and
   distributing the second motion information to the terminal.

### REFERENCE SIGNS LIST

- 1: Head mounted display terminal
- 2: Server
- 11: Input processing unit
- 12: Transmission data processing unit
- 13: Reception unit
- 14: Program processing unit
- 15: Design data storage unit
- 16: Display unit
- 21: Motion information processing unit
- 22: Operation unit
- 31: Bone position holding unit
- 32: User position acquisition unit
- 41: Rendering unit
- 51: Reception unit
- 52: User management unit
- 53: Program processing unit
- 54: Bone position holding unit
- 55: Distribution unit
- 101: Animation storage unit
- 111: Motion matching database
- 151: Part importance database
- 201: Rendering unit
- 202: Design data storage unit
- 203: Support information holding unit
- 211: Complementary unit
- 251: Chat information acquisition unit
- 261: User relationship holding unit

## Claims

1. A distribution device comprising:
a reception unit configured to receive first motion information indicating a motion of a user;
a distribution unit configured to distribute second motion information indicating a motion of an avatar corresponding to the user, to a terminal that displays the avatar; and
an adjustment unit configured to adjust an information amount of the second motion information distributed by the distribution unit in accordance with the first motion information.

2. The distribution device according to claim 1, wherein
the adjustment unit adjusts the information amount of the second motion information in accordance with a distribution priority set on a basis of at least the first motion information.

3. The distribution device according to according to claim 2, wherein
the first motion information includes information indicating a position and an angle of a joint of the user, and
the second motion information includes information indicating a position and an angle of a joint of the avatar corresponding to the joint of the user.

4. The distribution device according to according to claim 3, wherein
the adjustment unit adjusts the information amount of the second motion information, in accordance with the distribution priority set on a basis of change amounts of the position and the angle of the joint of the user indicated by the first motion information.

5. The distribution device according to claim 4, wherein
the adjustment unit adjusts a distribution frequency of the second motion information in accordance with the distribution priority, for each joint of the avatar.

6. The distribution device according to claim 2, wherein
in a case where a type of the motion of the user indicated by the first motion information is a predefined type, the adjustment unit sets specific information that allows to specify a type of the motion of the avatar corresponding to the type of the motion of the user by the terminal, as the second motion information distributed by the distribution unit.

7. The distribution device according to claim 3, wherein
the adjustment unit adjusts a distribution frequency of the second motion information for each joint of the avatar, in accordance with the distribution priority set on a basis of a type of the motion of the user indicated by the first motion information.

8. The distribution device according to claim 2, wherein
the adjustment unit adjusts the information amount of the second motion information, in accordance with the distribution priority set on a basis of a display mode of the avatar from a viewpoint of a viewer who uses the terminal.

9. The distribution device according to claim 8, wherein
the adjustment unit adjusts the information amount of the second motion information, in accordance with the distribution priority set on a basis of whether or not there is a shielding object between the viewpoint of the viewer.

10. The distribution device according to claim 8, wherein
the adjustment unit adjusts the information amount of the second motion information, in accordance with the distribution priority set on a basis of an amount of light reaching the avatar.

11. The distribution device according to claim 8, wherein
the adjustment unit adjusts the information amount of the second motion information, in accordance with the distribution priority set on a basis of a display area of the avatar displayed on the terminal.

12. The distribution device according to claim 2, wherein
the adjustment unit adjusts the information amount of the second motion information, in accordance with the distribution priority set on a basis of a relationship between the viewer who uses the terminal and the user.

13. The distribution device according to claim 12, wherein
the adjustment unit adjusts the information amount of the second motion information, in accordance with the distribution priority set on a basis of a group to which the viewer belongs.

14. The distribution device according to claim 12, wherein
the adjustment unit adjusts the information amount of the second motion information, in accordance with the distribution priority set on a basis of a list indicating connection between the user and the viewer.

15. The distribution device according to claim 12, wherein
the adjustment unit adjusts the information amount of the second motion information, in accordance with the distribution priority set on a basis of the number of times when the user and the viewer have contact with each other or are close to each other in a virtual space or a time elapsed from when the user and the viewer have contact with each other.

16. The distribution device according to claim 12, wherein
the adjustment unit adjusts the information amount of the second motion information, in accordance with the distribution priority set on a basis of the number of viewers including the avatar in a field of view.

17. The distribution device according to claim 12, wherein
the adjustment unit adjusts the information amount of the second motion information, in accordance with the distribution priority set on a basis of whether or not the user makes a statement.

18. The distribution device according to claim 12, wherein
the adjustment unit adjusts the information amount of the second motion information, in accordance with the distribution priority set on a basis of routes or directions in which a plurality of the avatars moves in a virtual space.

19. A distribution method comprising:
by a distribution device,
receiving first motion information indicating a motion of a user;
adjusting an information amount of second motion information indicating a motion of an avatar, distributed to a terminal that displays the avatar corresponding to the user; and
distributing the second motion information to the terminal.

20. A program for causing a computer to execute processing comprising:
receiving first motion information indicating a motion of a user;
adjusting an information amount of second motion information indicating a motion of an avatar, distributed to a terminal that displays the avatar corresponding to the user; and
distributing the second motion information to the terminal.
